# EUROPEAN PATENT SPECIFICATION

(11) **EP 3 611 065 B1**
(45) Date of publication and mention of the grant of the patent: **24.02.2021**
(21) Application number: 19182759.1
(22) Date of filing: 27.06.2019
(51) Int. Cl.: B60T 15/04

(54) **PARK RELEASE VALVE - SINGLE 4-WAY 3-POSITION (4/3 VALVE) SPOOL (ROD) & SLEEVE VALVE ARRANGEMENT WITH POP-OUT FUNCTION**
PARKSPERRENLÖSEVENTIL EINFACHE ANORDNUNG AUS 4-WEGE-3-POSITIONEN (4/3-VENTIL)-SPULE (STANGE) UND HÜLSENVENTIL MIT ÖFFNUNGSFUNKTION
SOUPAPE DE RELÂCHEMENT DE FREIN DE STATIONNEMENT - AGENCEMENT SIMPLE DE SOUPAPE À MANCHON ET DE BOBINE (TIGE) À 4 VOIES ET À 3 POSITIONS (SOUPAPE 4/3) AYANT UNE FONCTION D'ÉJECTION

(30) Priority: 13.07.2018 IN 201811026350
(43) Date of publication of application: 19.02.2020
(73) Proprietor: WABCO Europe BVBA, 1170 Brüssel (BE)
(72) Inventor: BHARATHIRAJA, Se, 600058 Chennai (IN); NAGARAJAN K.P., Kuppureddipatti Ponnusamy, 600058 Chennai (IN); RAJASEKARAN, Natarajan, Cuddalore-3 (IN); APPANASAMY, Sakkaraipandi, 600069 Chennai (IN)
(74) Representative: Rabe, Dirk-Heinrich

(56) References cited:
- EP-A1- 2 426 021
- CA-A1- 2 502 129
- DE-B4- 19 854 881
- DE-C2- 19 818 982
- DE-U1-202015 105 790
- GB-A- 2 310 695
- US-A1- 2017 370 485

## Description

The invention relates to a park release valve for a trailer vehicle having a truck and a trailer and having a pneumatic brake system, and for controlling an emergency braking modulator (EBM) and/or spring-loaded brakes (SBA) of the trailer, comprising: a valve housing, a moveable valve element, and a push button attached to the valve element for moving the valve element relative to the valve housing, the valve housing comprising: a supply port for receiving a supply pressure from the truck; a reservoir port for connection with a trailer reservoir; a delivery port for providing a brake pressure for at least an emergency braking modulator (EBM) and/or one spring-loaded brake (SBA) of the trailer; and an exhaust port for releasing pressure to the atmosphere; and the valve element is moveable into at least three positions, wherein in a parking position the delivery port is in communication with the exhaust port; in a driving position the delivery port is in communication with the supply port; and in a release position the delivery port is in communication with the reservoir port; and wherein, when the supply pressure exceeds a predetermined threshold value, switching in the release position is prohibited. The invention moreover refers to a pneumatic brake system for a trailer of a trailer vehicle having a truck and the trailer.

A park release valve of the aforementioned type is for example disclosed in EP 3 228 512 A1. The park release valve disclosed therein comprises an outer control piston and an inner control piston provided therein, a supply port, a supply container port, a release port and a working port, wherein the outer control piston is moveable in at least three positions. In a release position the supply container port is connected with the working port. In a driving position, the supply port is connected with the supply container port and the working port. In a parking position, the working port is connected to the release port. Thus, during driving pressure of the supply port is supplied to the supply container port, for filling up the container of the trailer. During the driving position, the inner control piston is supplied with the supply pressure and pushes against the outer control piston in such a way that the outer control piston is restricted in its movement, such that it cannot move into the release position. Thus, during driving switching in the release position is prohibited.

The pneumatic brake system of a trailer typically is connected to the truck by means of two pneumatic lines. One of the pneumatic lines supplies a control pressure via a control connection to the trailer (yellow palm coupling). This connection also is referred to "brake" or "control". The other line provides supply pressure via a coupling called "supply" to the trailer (also called "red palm coupling").

Such braking systems have integrated safety functions for the event of a brake-off of the supply line. For carrying out these safety functions, the pressure in the supply line is observed. When a high pressure loss is identified, the trailer is automatically braked using spring-loaded brakes (SBA) of the trailer.

The truck usually comprises a reservoir for pressurized air which is filled via the supply connection. Due to this arrangement, the trailer may use its service brakes a couple of times without requiring additional pressurized air from the truck.

Prior art pneumatic braking systems comprise combined brakes having a membrane type service brake piston and a spring-loaded brake piston in one component. This bears the advantage that brake piston, brake lever and brake discs only need to be in one component and not in two components. Such combined braking cylinders are called Tristop cylinders. However, a separated arrangement also is contemplated.

In a trailer, which is paked and disconnected from the truck, the spring-loaded brakes (SBA) are activated, i.e. the spring-loaded brake cylinders are vented. For maneuvering or shunting the trailer, the spring-loaded brakes need to be released. For this task, a special park release valve is provided, which supplies the spring-loaded brakes directly or indirectly with pressurized air of the reservoir of the trailer. After finishing the maneuvering, the spring-loaded brakes need to be vented again. Therefore, the park release valve is brought into a park position.

In practice, the park release valve may be formed out of two separately operable venting units. A more compact valve is formed by combining the two functions integrating them as far as possible.

From EP 2 058 187 B1 a parking brake valve is known for a control device for a trailer of a vehicle comprising a service brake having a service brake cylinder, a parking brake having a spring brake cylinder, an air suspension having air suspension bellows and a housing. A sliding valve element is guided for a sliding movement and sealed, the sliding valve element comprising a manual button or handle located outside from the housing. By means of the manual button or handle the sliding valve element is optionally manually movable into an aerating position or a de-aerating position for the spring brake cylinder of the parking brake. The parking brake valve moreover comprises an opening valve located in a line leading to the spring brake cylinders, wherein the opening valve is switchable by a pressure in the line of the air suspension leading to the air suspension bellows from the closed position into an open position. Thus, the parking brake valve in this disclosure is integrated with the air suspension system of the trailer. Further integrated devices are known from DE 198 18 982 C2 and DE 198 54 881 B4.

The object of the present invention is to provide a park release valve of the type known from EP 3 228 512 A1 which is easy to manufacture, highly integrated and compact.

In a first aspect of the invention, this object is solved by a park release valve of the type defined in the introductory portion, wherein the valve element is formed as a valve spool having at least one land and at least one valley, wherein the valve housing defines at least a first chamber, a second chamber, a third chamber, a fourth chamber and a fifth chamber between the valve spool and the housing which selectively closable by moving the valve spool. Preferably, at least two, three, four, or five of the chambers are independent from each other.

By this arrangement it is not necessary to have an outer and inner cylinder which move relative to each other. Rather, the valve spool acts together with the housing for selectively closing at least one of the chambers and connecting other chambers such that fluid may flow from one chamber to another chamber for connecting respectively the ports in the parking position, driving position and release position. For achieving this, the ports, i.e. the supply port, reservoir port, delivery port and exhaust port are connected with at least one of the chambers. Moreover, a 4-way 3-position valve is obtained, with a valve spool and sleeve construction, wherein the sleeve is formed by the valve housing.

Preferably, the park release valve comprises a sixth chamber in the valve housing in which a piston is moveable and seated, the sixth chamber is in communication with the supply port. The piston is seated in a movable way in the sixth chamber such that when pressure is supplied to the supply port, the piston is moved from a first retracted position to a second extended position. The function is similar to the function of the control piston disclosed in EP 3 228 512 A1.

In a preferred embodiment, the valve spool comprises a first end and a second end, wherein the push button is attached to the first end and the second end is adapted to selectively engage the piston. Within the term "selectively engage" also a simple contact could be included. The piston preferably comprises an inner hollow portion in which the second end of the valve spool is moveable and seated. The piston thus comprises a bottom wall and an axially extending side wall. When the second end of the valve spool contacts the bottom wall of the piston, it is appreciated that the valve spool engages the piston. In this position, the piston could push the valve spool to a different position and thus an engagement between the piston and the valve spool is obtained.

Preferably, the piston selectively contacts the second end of the valve spool for pushing the valve element from the release position to the driving position or preventing the valve element from being moved from one of the driving position and the parking position into the release position. Thus, when supply pressure is supplied to the supply port from the truck, movement of the valve element between the parking position and driving position is possible, while switching to the release position is prohibited. When supply pressure is supplied to the supply port, the piston preferably is in the second extended position.

In a further preferred embodiment, the valve spool comprises a first land, a second land, and a third land, wherein a first valley separates the first and second lands, and a second valley separates the second and third lands. Preferably, in the parking position the second valley connects the fourth and fifth chambers, in the driving position the first valley connects the second and third chambers and the second valley connects the third and fourth chambers, and in the release position the first valley connects the first and second chambers. With this arrangement, a simple connection of the different ports is possible only using one valve spool which is moveable into three positions. The construction is highly simplified, and a compact design can be achieved.

Preferably, at least in the driving position the supply port is in communication with the reservoir port for filling the trailer reservoir. The trailer usually does not have a separate air production system and therefore is required to be supplied by the truck for filling the reservoir of the trailer. This is preferably at least done in the driving position, since in this position the truck is driving, and the air production system of the truck is running. Preferably, in every position of the valve spool the supply port is in communication with the reservoir for filling the trailer reservoir. Thus, also in the parking position the reservoir can be filled. In the release position the truck does not provide pressurized air to the supply port and therefore the reservoir of the trailer cannot be filled anyway.

For securing the reservoir, preferably a check valve is provided between the supply port and the reservoir port for prohibiting flow from the reservoir port to the supply port. This in particular is beneficial when the supply port in every position of the valve spool is in communication with the reservoir port for filling the trailer reservoir. Thus, in case the pressure in the reservoir is higher than at the supply port, the check valve closes the communication between the supply port and the reservoir and prohibits flow from the reservoir to the supply port.

According to a further preferred development of the invention, the valve housing comprises a valve housing body and at least one chamber insert which is seated in a central recess formed in the housing body, the chamber insert comprising a central passage for receiving the valve spool therein and moreover comprises at least a first through-hole for forming the first chamber. Preferably, the chamber insert comprises further a second through-hole for forming the second chamber, a third through-hole for forming the third chamber, a fourth through-hole for forming the fourth chamber, and a fifth through-hole for forming the fifth chamber. Thus, the chamber insert together with the housing body forms the different chambers in the valve housing.

Preferably, the chamber insert comprises at least a first sealing ring, which seals radially outwardly against an inner surface of the central recess and radially inwardly against the valve spool. Preferably, the chamber insert comprises a second sealing ring, a third sealing ring, and a fourth sealing ring, which each seal radially outwardly against the inner surface of the central recess and radially inwardly against the valve spool. Those sealing rings help to define the chambers and support a grid sealing between the chambers to prevent air passing from one chamber to another chamber without purpose.

Moreover, the park release valve may comprise a first lip seal for sealing the first end of the valve spool, and a second lip seal for sealing the second end of the valve spool. The lip seals are preferably used to seal between the chamber insert and the valve spool, or they are used to seal the valve housing body and the valve spool, dependent on the construction of the chamber insert.

Preferably, the chamber insert is formed from a plastic material and releasably seated within the valve housing body. The chamber insert preferably is held in place by a fixing screw, or multiple fixing screws. In a further alternative, the chamber insert is engaged with the valve housing body in a form-locking fit, e.g. by a snap fit. Alternatively, the chamber insert can also be formed from a metal material. When the chamber insert is formed from a plastic material, also the sealing rings and lip seals can be formed integrally with the chamber insert, e.g. by means of two-component injection molding.

In a further preferred development, the park release valve comprises a position indicator at the push button, which in the parking position is retracted into the push button, in the driving position is substantially flush with the push button, and in the release position protrudes from the push button. This enables an operator to easily see in which position the park release valve is, and whether e.g. the trailer is ready for shunting. In one preferred embodiment, the indicator has a different color than the push button. This further increases a visual understanding of the position of the park release valve. E.g. the indicator may be red, while the push button itself is black.

According to a second aspect of the invention, the above-mentioned problem is solved by a pneumatic brake system for a trailer of a trailer vehicle having a truck and a trailer, the pneumatic brake system comprising: a trailer reservoir, a truck supply coupling for receiving a supply pressure from the truck, at least one spring-loaded brake (SBA), and a park release valve according to any of the beforehand described preferred embodiments of the park release valve according to the first aspect of the invention.

It shall be understood that the park release valve of the first aspect of the invention and the pneumatic brake system according to the second aspect of the invention comprises similar and identical further developments, as in particular described in the dependent claims. In so far reference is made to the above description.

For a more complete understanding of the invention, the invention will now be described in detail with reference to the accompanying drawings. The detailed description will illustrate and describe what is considered as a preferred embodiment of the invention. It should of course be understood that various modifications and changes in form or detail could readily be made without departing from the scope of the invention defined by the claims. It is therefore intended that the invention may not be limited to the exact form and detail shown and described herein, nor to anything less than the whole of the invention disclosed herein and as claimed herein after. Further, the features described in the description, the drawings and the claims disclosing the invention may be essential for the invention considered alone or in combination. In particular, any reference signs in the claims shall not be construed as limiting the scope of the invention. The wording "comprising" does not exclude other elements or steps. The word "a" or "an" does not exclude the plurality. The wording "a number of" items comprising also the number 1, i.e. a single item, and further numbers like 2, 3, 4 and so forth. In the accompanying drawings:
- Fig. 1: a schematic layout of a pneumatic brake system for a trailer of a trailer vehicle having a truck and a trailer;
- Fig. 2a - 2c: a schematic layout of a park release valve in the three different positions;
- Fig. 3: a perspective view of the park release valve;
- Fig. 4: a cross-sectional view of the park release valve in the driving position;
- Fig. 5a: the cross-sectional view of Fig. 4, wherein the park release valve is in the parking position;
- Fig. 5b: the cross-sectional view of Fig. 4, wherein the park release valve is in the driving position;
- Fig. 5c: the cross-sectional view of Fig. 4, wherein the park release valve is in the release position;
- Fig. 5d: the cross-sectional view of Fig. 4, in which the park release valve is in the driving position;
- Fig. 6: a detail of a cross-sectional view showing a check valve;
- Fig. 7: a perspective exploded view of a chamber insert and a valve spool;
- Fig. 8: a cross-sectional view of a valve spool; and
- Fig. 9: one element of a chamber insert.

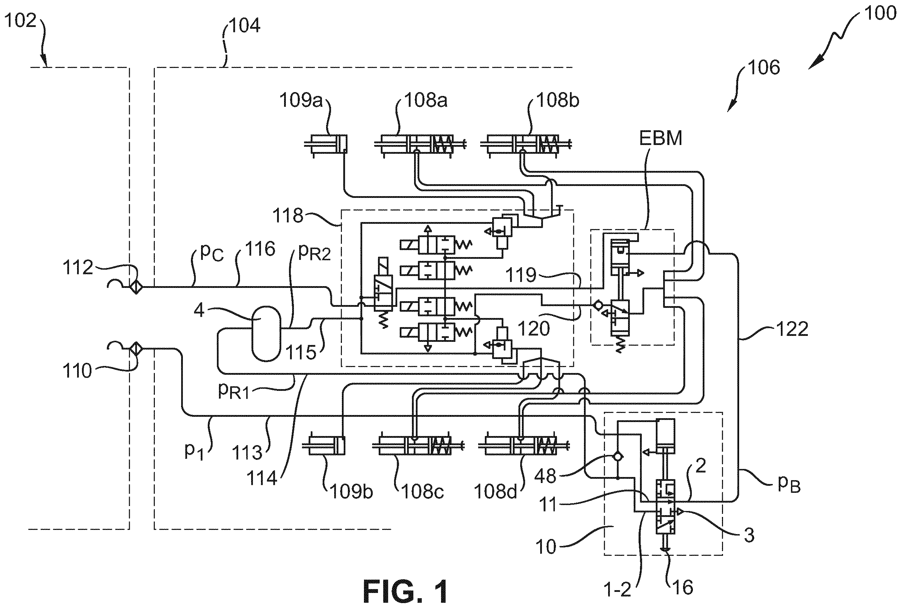

Fig. 1 shows an overall view of a vehicle 100 having a truck 102 and a trailer 104 and having a pneumatic brake system 106 for the trailer 104. The pneumatic brake system 106 of the trailer 104 comprises four spring-loaded brakes 108a, 108b, 108c, 108d for braking the trailer 104 in a parking position, as well as optionally braking the trailer 104 in emergency situations. Moreover, the trailer 104 comprises service brakes 109a, 109b for braking the trailer during normal operation. Both, the spring-loaded brakes 108a - 108d as well as the service brakes 109a, 109b are supplied with supply pressure PR from a reservoir 4, which in turn is supplied by the truck 102 via a supply coupling 110 (red palm coupling). The trailer 104 receives a truck supply pressure P1 via the supply coupling 110. Moreover, the trailer 104 comprises a control coupling 112 (yellow palm coupling) for receiving a control pressure PC from the truck 102 which indicates a braking signal for the trailer 104.

The supply coupling 110 is connected via a first pressure line 113 to a park release valve 10 which will be described below in more detail. The park release valve 10 in turn is connected to a second pressure line 114 which in turn is connected to the reservoir 4. Via the second pressure line 114, reservoir 4 is supplied with the supply pressure for the reservoir P1 from the park release valve 10. Moreover, reservoir 4 is connected to a third pressure line 115 and the third pressure line 115 is supplied by the reservoir 4 with a reservoir pressure PR2.

The control coupling 112 is connected to a fourth pressure line 116. Both the third and the fourth pressure lines 115, 116 are connected to a modulator valve unit 118 which in general is known in the prior art and will not be described in more detail. The modulator valve unit 118 receives both, the reservoir pressure PR2 and the control pressure PC and provides respective pressures to both, the spring-loaded brakes 108a - 108d and the service brakes 109a, 109b dependent on the control pressure PC and optionally dependent on electric switching signals.

The modulator valve unit 118 is connected via fifth and sixth pressure lines 119, 120 to an optional emergency braking modulator EBM which in this particular embodiment of the pneumatic brake system 106 is provided. However, it shall be understood that the emergency braking modulator EBM is only optional and not essential for the invention.

In this embodiment, the emergency braking modulator EBM also is connected to the park release valve 10 via a seventh pressure line 122 for receiving a braking pressure PB from the park release valve 10 as will be described in more detail below. The emergency braking modulator EBM receives the braking pressure PB and dependent on the received braking pressure PB supplies the spring-loaded brakes 108a - 108d with pressure or vents them, respectively. Alternatively, the seventh pressure line 122 could also be directly connected to the spring-loaded brakes 108a - 108d such that the park release valve 10 is directly connected to the spring-loaded brakes 108a - 108d. In the shown embodiment, the spring-loaded brakes 108a - 108d are controlled by the park release valve 10 by the braking pressure PB indirectly, as the emergency braking modulator EBM is placed between the park release valve 10 and the spring-loaded brakes 108a - 108d. However, ultimately the spring-loaded brakes 108a - 108d are controlled by the park release valve 10.

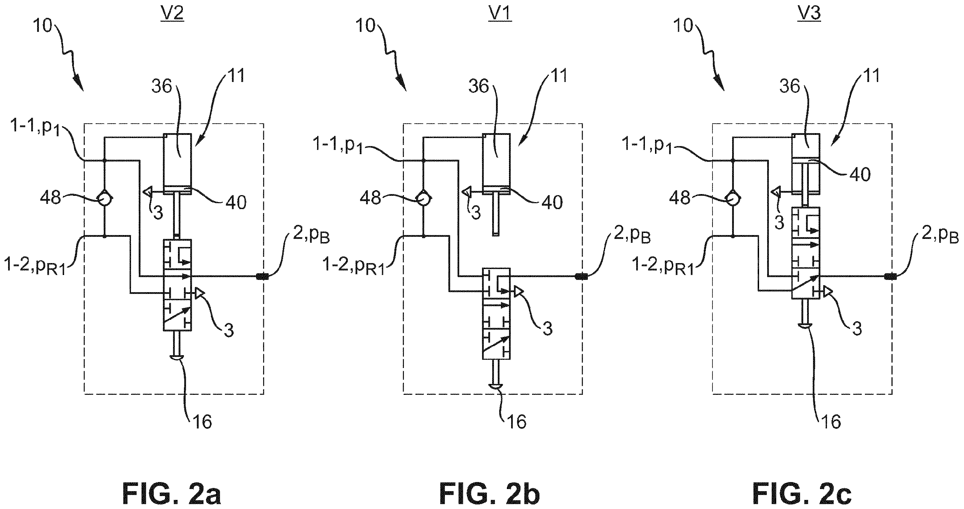

Figs. 2a to 2c now show three different positions of the park release valve 10 in detail, based on a schematic layout of the park release valve 10. The park release valve 10 comprises a supply port 1-1 connected to the first pressure line 113 and receiving the truck supply pressure P1, a reservoir port 1-2, connected to the second pressure line 114 and supplying the supply pressure PR1 for the reservoir 4, a delivery port 2 for providing a brake pressure PB into the seventh pressure line 122, and an exhaust port 3 for releasing pressure to the environment. The park release valve 10 comprises three different positions V1, V2, V3 and therefore is formed as a 4-way 3-position (4/3 valve). Fig. 2a shows the driving position V2, Fig. 2b shows the parking position V1, and Fig. 2c shows the release position V3. In the driving position V2 (see Fig. 2a), the supply port 1-1 is connected to the delivery port 2, such that truck supply pressure P1 is delivered through the second pressure line 114 as the supply pressure PR1 to reservoir 4. At the same time, reservoir port 1-2 is closed, as well as the exhaust port 3.

In the parking position V1 (cf. Fig. 2b), the delivery port 2 is connected to the exhaust port 3 for venting the seventh pressure line 122. This has as a consequence that via the emergency braking modulator EBM the spring-loaded brakes 108a - 108d are also vented, and thus activated. Both, the supply port 1-1 and the reservoir port 1-2 are closed in this parking position V1. Thus, truck supply pressure P1 is blocked and not delivered.

Further, in the release position V3, the reservoir port 1-2 is connected to the delivery port 2, such that the braking pressure PB is supplied to the seventh pressure line 122, which in turn results in the spring-loaded brakes 108a - 108d to be ventilated and thus released.

It is noted that in both, the driving position V2 (Fig. 2a) and in the release position V3 (Fig. 2c), the spring-loaded brakes 108a - 108d are released due to the braking pressure PB being delivered in the seventh pressure line 122. However, while in the driving position V2 the braking pressure PB is supplied via the supply port 1-1 using the truck supply pressure P1, in the release position V3 the reservoir pressure PR is supplied via the second pressure line 114 and the reservoir port 1-2.

As also can be seen in Figs. 2a - 2c, the park release valve 10 comprises a push button 16 for bringing the park release valve 10 into the three different positions V1, V2, V3. Moreover, between the supply port 1-1 and the reservoir port 1-2 a check valve 48 is arranged, allowing flow from the supply port 1-1 to the reservoir port 1-2. This check valve 48 allows to supply truck supply pressure P1 directly via the check valve 48 to the reservoir port 1-2, or more specifically to the second pressure line 114 and ultimately to the reservoir 4. Thus, this check valve 48 allows supply of truck supply pressure P1 to the reservoir 4 irrespective of the position V1, V2, V3 of the park release valve 10.

The park release valve 10 according to this embodiment is also provided with a position restriction mechanism 11 which acts pneumatically, and which restricts switching of the park release valve 10. More specifically, when the position restriction mechanism 11 is activated in the parking position V1 and the driving position V2, the park release valve 10 may only be switched between these two positions V1, V2, while switching of the park release valve 10 into the release position V3 is prohibited. The position restriction mechanism 11 comprises a chamber 36 (sixth chamber 36) as will be described in more detail below. This sixth chamber 36 is connected to the supply port 1-1 and thus is provided with truck supply pressure P1. In this sixth chamber 36 a piston 40 is moveably seated which is pushed into an extended position (Figs. 2a, 2b) when truck supply pressure P1 is supplied to the supply port 1-1, and which may move to a retracted position (Fig. 2c) when no truck supply pressure P1 is supplied, e.g. when the supply coupling 110 is open. When in an extended position (Figs. 2a, 2b), piston 40 restricts switching of the park release valve 10 to only be switchable between the parking position V1 and the driving position V2.

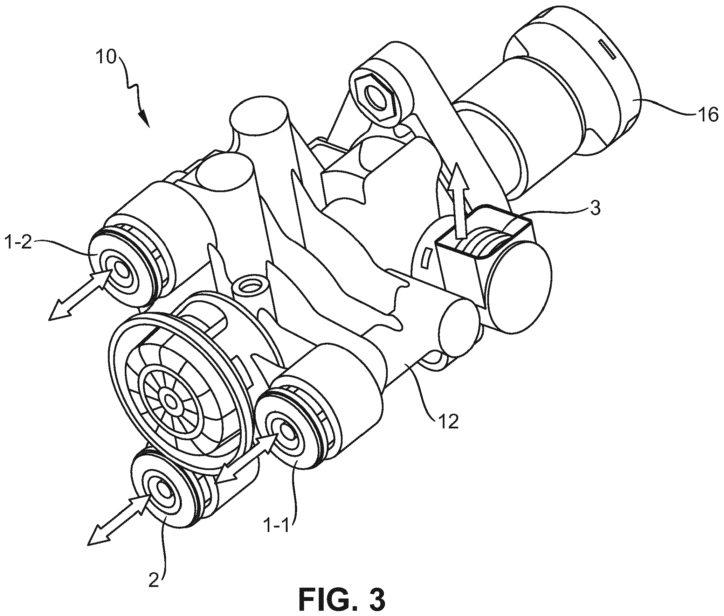

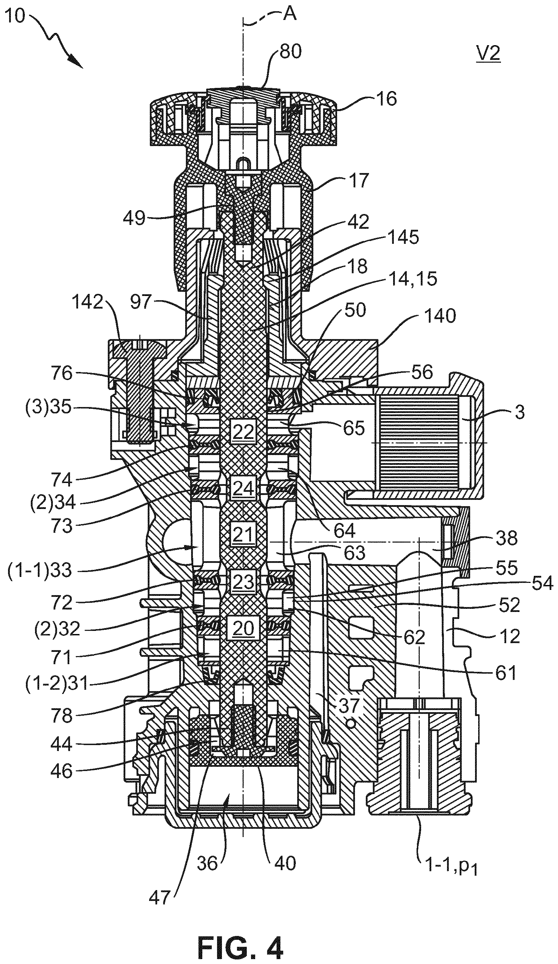

The structure of the park release valve 10 can best be seen from Figs. 3 and 4. The park release valve 10 comprises a valve housing 12 (see Fig. 3) which has a substantially axial arrangement with the supply port 1-1, the reservoir port 1-2 and the delivery port 2 at a first lower end, opposite to the push button 16. The exhaust port 3 is at the side of the valve housing 12 and opens to the environment.

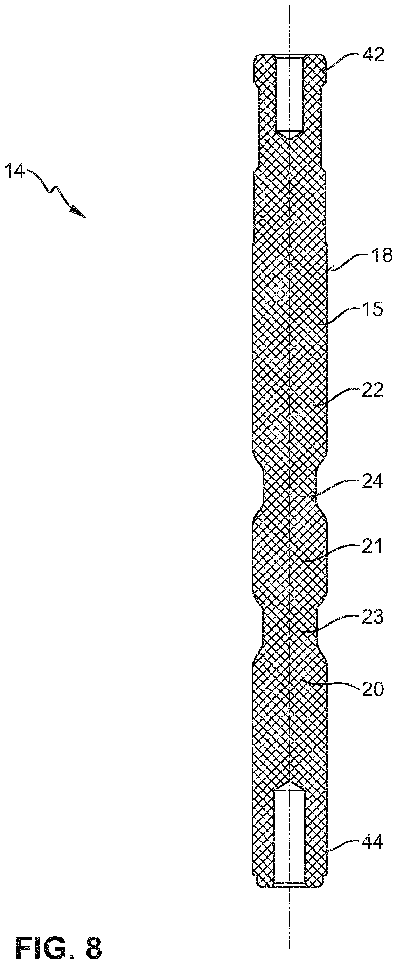

Within the valve housing 12, a moveable valve element 14 is provided (see Fig. 4). The valve element 14 in this embodiment is formed as a valve spool 15 (see also Fig. 8). The valve spool 15 is attached to the push button 16. The valve spool 15 comprises a substantially cylindrical outer surface 18 defining a first land 20, a second land 21 and a third land 22. The first, second and third lands 20, 21, 22 are separated by two valleys, the first valley 23 and the second valley 24. The first and second valleys 23, 24 are formed as circumferential grooves or recesses in the substantially cylindrical outer surface 18 of the valve spool 15.

The valve housing 12 defines five chambers, namely a first chamber 31, a second chamber 32, a third chamber 33, a fourth chamber 34, and a fifth chamber 35. By moving the valve spool 15 along its central axis A, the chambers 31 - 35 can be selectively closed and set into communication via the lands 20 - 22 and valleys 23, 24 of the valve spool 15. Out of these five chambers 31 - 35, the first chamber 31 is in fluid communication with the reservoir port 1-2, the second chamber 32 is in fluid communication with the delivery port 2, the third chamber 33 is in fluid communication with the supply port 1-1, the fourth chamber 34 again is in fluid communication with the delivery port 2, and the fifth chamber 35 is in fluid communication with the exhaust port 3. Thus, again referring to Figs. 2a to 2c, in the parking position V1, the valve spool 15 needs to connect the second or fourth chambers 32, 34 with the fifth chamber 35. In the driving position V2 (which is shown in Fig. 4), the valve spool 15 needs to connect the third chamber 33 with the second and/or fourth chamber 32, 34. In the release position V3, the valve spool 15 needs to connect the first chamber 31 with the second or fourth chambers 32, 34.

In Fig. 4 the driving position V2 is shown. As can be seen in Fig. 4, the first valley 23 is between the second chamber 32 and the third chamber 33 and connects them to each other. Thus, fluid is allowed to flow from the third chamber 33 to the second chamber 32. The same is true for the second valley 24. The second valley 24 is between the third chamber 33 and the fourth chamber 34 and connects them to each other. Thus, fluid from the third chamber 33 can also flow to the fourth chamber 34.

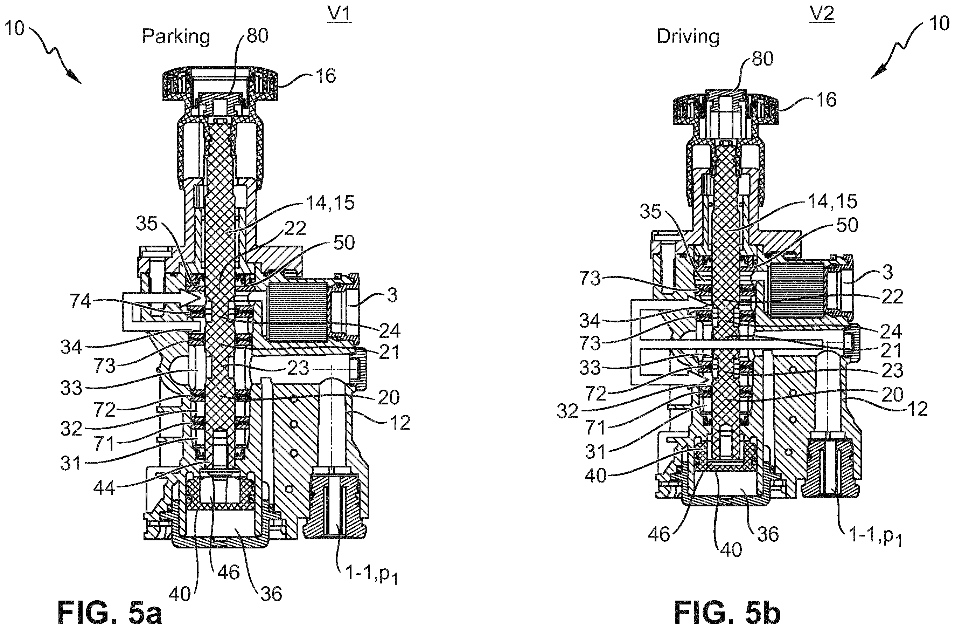

As already described with respect to Figs. 2a to 2c, the valve housing 12 defines a sixth chamber 36. This sixth chamber 36 is not connected to any of the first to fifth chambers 31 - 35 and not closable or openable using the valve spool 15. The sixth chamber 36 is formed at the lower end of the valve housing 12 and a piston 40 is moveably seated within the sixth chamber 36. The sixth chamber 36 is connected to the supply port 1-1 via a side conduit 37 which branches off a main supply conduit 38 of the supply port 1-1. Thus, when truck supply pressure P1 is supplied to the supply port 1-1, piston 40 is raised into the extended position which is shown in Fig. 4 and eventually pushes the valve spool 15 upwards into the driving position V2. The further action of the piston 40 will be described in more detail with respect to Figs. 5a to 5d.

The valve spool 15 further comprises a first end 42 and a second end 44, wherein the push button 16 is attached to the first end 42 and the second end 44 is seated in the piston 40. More specifically, the piston 40 comprises an inner hollow portion 46 in which the second end 44 of the valve spool 15 can dive. For guiding the valve spool 15, more specifically the second end 44 in the hollow portion 46, a guiding plate 47 is attached to the second end 44, having an outer circumference which closely fits the inner circumference of the hollow portion 46. The piston 46 thus allows the valve spool 15, when in the extended position shown in Fig. 4, to be moved further upwards with respect to Fig. 4, but not downwards, against the truck supply pressure P1.

The push button 16 comprises a push button body 17 being attached to the first end 42 using a screw 49.

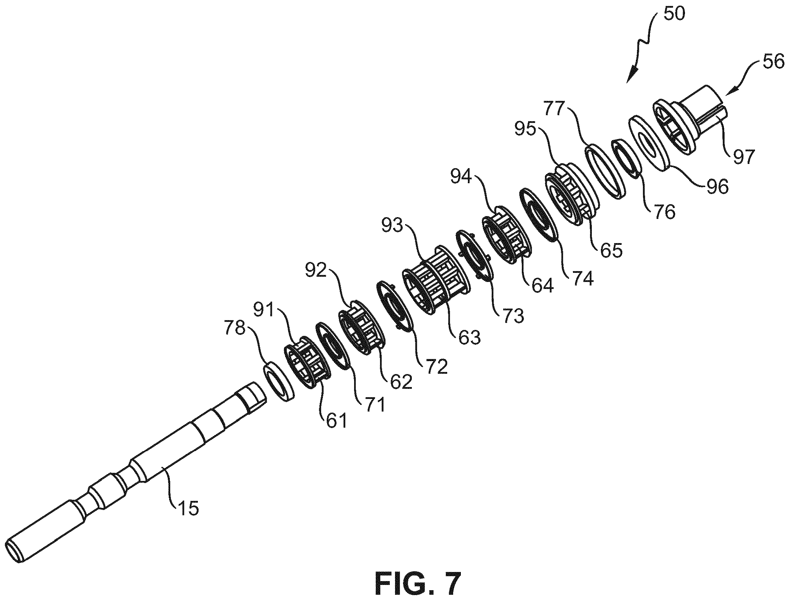

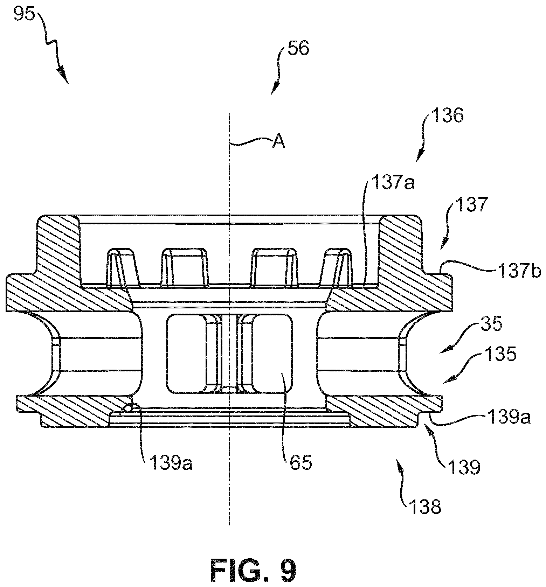

The first to fifth chambers 31 - 35 in the shown embodiment are formed by a chamber insert 50 (see also Figs. 7 and 9). The chamber insert 50 is inserted into a central recess 54 formed in a housing body 52. The housing body 52 may be formed out of a single element and in particular made of plastic material or metal material. The chamber insert 50 preferably is formed out of several elements, or may be formed as a one-piece, again using plastic or metal material. The chamber insert 50 comprises a central passage 56 in which the valve spool 15 is seated. The chamber insert 50 itself seals against an inner surface 55 of the central recess 54.

The single chambers, namely the first chamber 31, the second chamber 32, the third chamber 33, the fourth chamber 34, and the fifth chamber 35 are formed by respective through-holes in the chamber insert 50. In this regard, the chamber insert 50 comprises a first through-hole 61, which in this embodiment forms the first chamber 31, a second through-hole 62, which in this embodiment forms the second chamber 32, a third through-hole 63, which in this embodiment forms the third chamber 33, a fourth through-hole 64, which in this embodiment forms the fourth chamber 34, and finally a fifth through-hole 65, which in this embodiment forms the fifth chamber 35. Thus, the valve housing body 52 does not need to have specific recesses or the like which would form one of the chambers 31 - 35. Rather the chambers 31 - 35 are simply formed by mounting the chamber insert 50 within the respective central recess 54. This is also the reason why the park release valve 10 of the present invention is called a valve of the spool-and-sleeve type. The chamber insert 50 forms a sleeve for the valve spool 15.

To improve sealing between the single chambers 31 - 35, ring seals are provided. In particular, a first ring seal 71 is provided between the first and second chambers 31, 32, a second ring seal 72 is provided between the second chamber and third chamber, a third ring seal 73 is provided between the third chamber 33 and fourth chamber 34, and a fourth ring seal 74 is provided between the fourth chamber 34 and fifth chamber 35. At the top and bottom ends of the chamber insert 50, additionally a first lip seal 76 and a second lip seal 78 are provided, to seal the first chamber 31 and fifth chamber 35, respectively, against the environment. The ring seals 71 - 74 and preferably also the lip seals 76, 78 are double acting, meaning that they seal at their radially outer surface against the inner surface 56 of the central recess 54. At their radially inner side they seal against the outer surface 18 of the valve spool 15. Each ring seal 71 - 74 may be formed as a single element or may also be formed from different parts. For example, each ring seal 71 - 74 may comprise a radially outer ring seal and a radially inner ring seal which are separate.

The single connection of the chambers 31 - 35 will now be described with reference to Figs. 5a to 5d. These positions have briefly been discussed with respect to Figs. 2a to 2c and reference to these drawings is made again. Figs. 5a to 5d specifically show the layout of Figs. 2a to 2c, however, in a construction as shown in Fig. 4.

In the parking position V1 (see Fig. 5a), the delivery port 2 needs to be connected to the exhaust port 3, so that the spring-loaded brakes 108a - 108d may be vented and thus activated. Therefore, the fourth chamber 34 needs to be connected to the fifth chamber 35 and the third chamber 33 and first chamber 31 need to be blocked. With respect to Fig. 5a, one can see that the valley 24 is in the region of the fourth sealing ring 74 providing fluid flow through the radially inner side of the fourth sealing ring 74 from the fourth chamber 34 to the fifth chamber 35. Moreover, the first land 20 and second land 21 are in contact with sealing rings 73, and 72 to block the third chamber 33. Also, the first chamber 31 and second chamber 32 are blocked by the first land 20.

In this position, the valve spool 15 is in the uppermost position, the piston 40 is in the extended upper position (sixth chamber 36 is ventilated by truck supply pressure P1) and the second end 44 of the valve spool 15 is lifted out of the hollow portion 46 of piston 40.

Moreover, as can also be seen in Fig. 5a, a position indicator 80 is provided at the push button 16. The position indicator 80 is fixed relative to the valve housing 12 and thus has different relative positions when the push button 16 moves. As the push button 16 is in the uppermost position in Fig. 5a, the position indicator 80 is retracted within the push button 16 and not easily visible from outside.

When now from the parking position the valve spool 15 is pushed using the push button 16 into the driving position V2 (Fig. 5b), push button 16 is moved down with respect to Fig. 5b and the position indicator 80 is flush with the upper surface of push button 16 as can be seen in Fig. 5b. This movement causes the valve spool 15 to move relative to the chamber insert 50 into a position which also is shown in Fig. 4. In the driving position V2, as can be inferred from Fig. 2a, the supply port 1-1 needs to be in communication with the delivery port 2 for delivering supply pressure P1 through the park release valve 10 as braking pressure PB to the spring-loaded brakes 108a - 108d for ventilating spring-loaded brakes 108a - 108d and thus releasing them. Exhaust port 3 needs to be blocked, and also reservoir port 1-2 should be blocked.

In this regard, in Fig. 5b (and Fig. 4) the first valley 23 is in the region of the second sealing ring 72 and again allowing the fluid to flow radially inwards from the second sealing ring 72 from the third chamber 33 to the second chamber 32. Also, the second valley 24 is in the region of the third sealing ring 73 and allows fluid to flow from the third chamber 33 radially inwardly of the sealing ring 73 to the fourth chamber 34. The first chamber 31 and the fifth chamber 35 are blocked by the first land 20 and third land 22, respectively.

Since truck supply pressure P1 is supplied to the supply port 1-1, the sixth chamber 36 is delivered with the truck supply pressure P1 and as a consequence the piston 40 is still in the upper extended position. However, in the driving position V2 the valve spool 15 is pushed downward with respect to Figs. 5a, 5b compared to Fig. 5a so as to cause the second end 44 to move downwards into the hollow portion 46 of piston 40 and engage with piston 40. A further downward movement of the valve spool 15 is prevented.

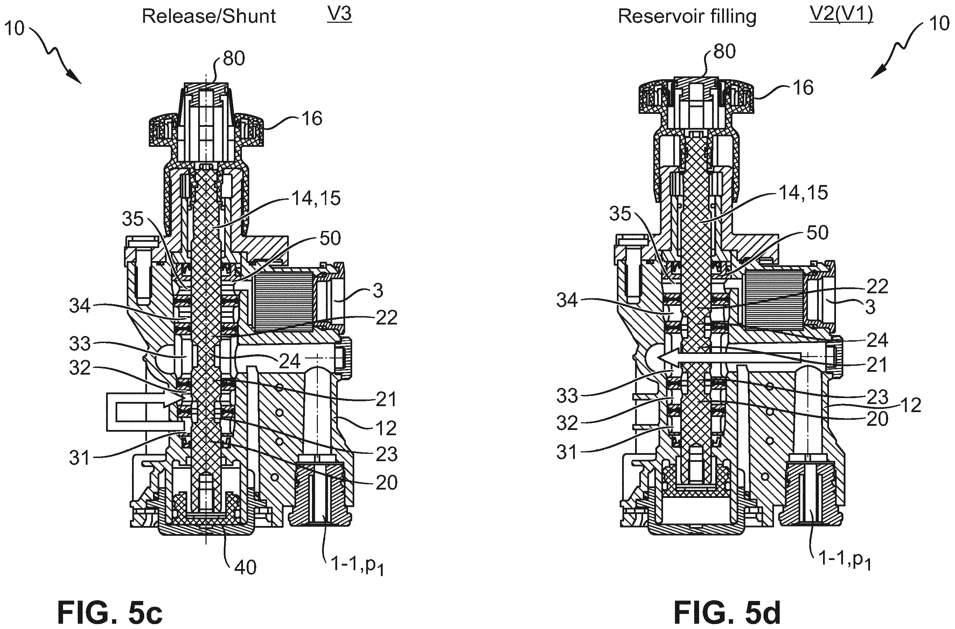

When now the supply coupling 110 is opened and no truck supply pressure P1 is delivered to supply port 1-1, the piston 40 may move into a lower retracted position, as shown in Fig. 5c. Fig. 5c shows the release position or shunt position V3, in which in particular no truck supply pressure P1 is supplied. In the release position V3 (see also Fig. 2c), the reservoir port 1-2 should be in communication with the delivery port 2, for supplying the spring-loaded brakes 108a - 108d with pressure from the reservoir 4 for releasing the spring-loaded brakes 108a - 108d. In this position it should be possible to shunt the trailer 104 without additional usage of the truck 102.

Thus, the operator or driver may push down the push button 16 further and into a position in which the position indicator 80 actually protrudes out of the push button 16, as shown in Fig. 5c. When the position indicator 80 becomes a different color than the push button 16, it can easily be seen and determined by the operator that the park release valve 10 is in the release position.

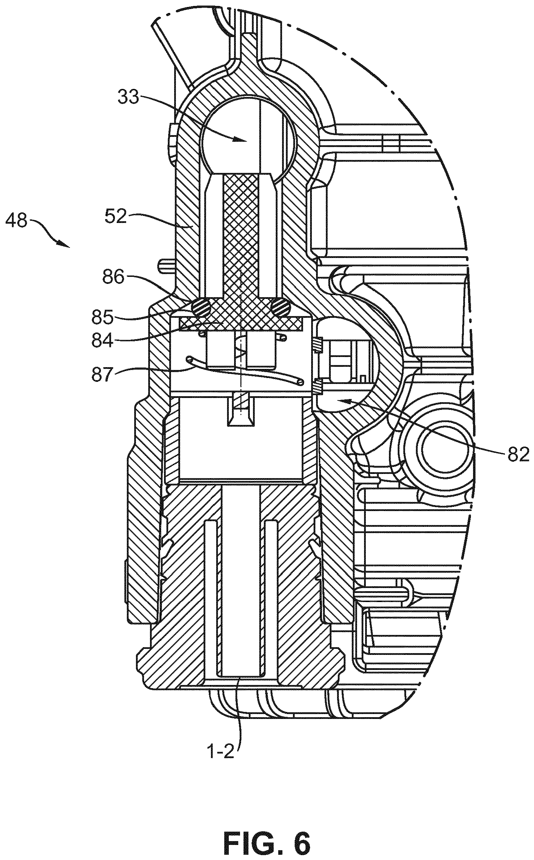

Fig. 5d illustrates that filling of reservoir 4 is feasible in any of the positions V1, V2, V3. In Fig. 5d this is illustrated based on the driving position V2, however, it should be understood that filling of reservoir 4 is also feasible in the parking position V1. In any position, in which the supply coupling 110 is closed and truck supply pressure P1 is delivered through supply port 1-1, this pressure should also be delivered to the reservoir port 1-2 via the check valve 48. The check valve 48 in detail can be seen in Fig. 6 which shows a detail of a cut of the reservoir port 1-2. Reservoir port 1-2 leads via a radial conduit 82 to the first chamber 31, as can also be inferred from Fig. 4. However, reservoir port 1-2 also leads to the third chamber 33 via check valve 48. The check valve 48 only allows flow of fluid from the third chamber 33 to the reservoir port 1-2, but not vice versa. Check valve 48 in this regard comprises a valve plate 84 having a plate sealing ring 85 which abuts against a respective check valve seat 86 formed in the valve housing body 52. The valve plate 84 is biased into the closed position (position shown in Fig. 6) using a spring 87. It shall be understood that this is only an exemplary embodiment of the check valve 48 and that any other check valve could also be used. Moreover, it should be understood that the check valve 48 is only optional and that reservoir 4 could be filled in a different way.

Fig. 7 now shows an exploded view of the chamber insert 50 and the valve spool 15. Chamber insert 50 in this embodiment is formed out of separate elements and stacked together. It should however also be understood that chamber insert 50 could be formed of a single element.

For forming the different chambers, the chamber insert 50 comprises five cages, namely a first cage 91, a second cage 92, a third cage 93, a fourth cage 94 and a fifth cage 95. The fifth cage 95 is shown in an enlarged view in Fig. 9. The fifth cage 95 is substantially formed rotational symmetric around the central axis A. It comprises a plurality of radial through-holes which together form the fifth through-hole 65. These through-holes 65 allow communication with a radially outer portion of the fifth cage 95 an a radially inner portion. The radially inner portion forms the central passage 56 for receiving the valve spool 15 (see also Figs. 4 and 7). Since air is only allowed to flow radially inwardly through the central passage 56 from one chamber to another chamber, these radial through-holes 65 are important. The fifth cage 95 also comprises a circumferential radial groove 135 which increases the volume of the fifth chamber 35.

The fifth cage element 95 comprises an upper axial face 136 with a stepped surface 137. A similar construction is shown at the lower axial face 138 which has a second stepped surface 139. The stepped surfaces 137, 139 are used to form receiving portions for respective seals. The first stepped surface 137 in particular comprises a radial inner portion 137a and a radial outer portion 137b. The radial inner portion 137a is used to receive the lip seal 76. The radial outer portion 137b receives a radial seal 77. The radial seal 77 is used to seal the fifth cage 95 against the inner surface 55 of central recess 54. The lip seal 76, however, seals against the valve spool 15 as described beforehand.

The second stepped surface 139 is adapted to receive the fourth sealing ring 74. The sealing rings 71 - 74 in this embodiment are formed as single elements having a radial inner and radial outer portion. Again, also the second stepped surface 139 comprises a radial inner portion 139a and a radial outer portion 139b, wherein a first radial inner portion of the fourth sealing ring 74 is seated at the radial inner portion 139a and a second portion of the fourth sealing ring 74 is seated on the radial outer portion 139b. The further cage elements 91, 92, 93 and 94 are similarly formed and therefore not shown in detail. On the opposite surface of the fourth sealing ring 74, the fourth cage element 94 is placed. Cage element 94 then acts together with the third sealing ring 73, onto which the third cage element 93 is placed. Second sealing ring 72, second cage element 92, first sealing ring 71, first cage element 91 and second lip seal 78 follow. At the first axial face 136 of the fifth cage 95 additionally a ring member 96 is placed for holding the first lip seal 76 and the ring seal 77 in place. On top of all these elements a topper member 97 is placed which holds all other elements in place. Topper member 97 is attached to the valve housing body 52 by a lid 140 (see Fig. 4) which is held in place by a screw 142.

As also can be inferred from Fig. 4, the topper member 97 comprises a radially inwardly extending protrusion 145 which prohibits the valve spool 15 from being pulled out of the park release valve 10.

Even though the single elements of the chamber insert 50 (sleeve) are not fixedly attached to each other, they could be, when this is desired.

### List of reference signs

- 1-1: supply port
- 1-2: reservoir port
- 2: delivery port
- 3: exhaust port
- 4: reservoir (trailer)
- 10: park release valve
- 11: position restriction mechanism
- 12: valve housing
- 14: valve element
- 15: valve spool
- 16: push-button
- 17: push-button body
- 18: surface valve spool
- 20: first land
- 21: second land
- 22: third land
- 23: first valley
- 24: second valley
- 31: first chamber
- 32: second chamber
- 33: third chamber
- 34: fourth chamber
- 35: fifth chamber
- 36: sixth chamber
- 37: side conduit
- 38: main supply conduit
- 40: piston
- 42: first end
- 44: second end
- 46: hollow portion
- 47: guide member
- 48: check valve
- 49: screw
- 50: chamber insert
- 52: valve housing body
- 54: central recess
- 55: inner surface
- 56: central passage
- 61: first through hole
- 62: second through hole
- 63: third through hole
- 64: fourth through hole
- 65: fifth through hole
- 71: first ring seal
- 72: second ring seal
- 73: third ring seal
- 74: fourth ring seal
- 76: first lip seal
- 77: radial seal
- 78: second lip seal
- 80: position indicator
- 82: radial conduit
- 84: valve plate
- 85: plate sealing ring
- 86: check valve seat
- 87: spring
- 91: first cage element
- 92: second cage element
- 93: third cage element
- 94: fourth cage element
- 95: fifth cage element
- 96: ring member
- 97: topper member
- 100: vehicle
- 102: truck
- 104: trailer
- 106: pneumatic braking system
- 108a, 108b, 108c, 108d: spring-loaded brakes (SBA)
- 109a, 109b: service brakes
- 110: supply coupling
- 112: control coupling
- 113: first pressure line
- 114: second pressure line
- 115: third pressure line
- 116: fourth pressure line
- 118: modulator valve unit
- 119: fifth pressure line
- 120: sixth pressure line
- 122: seventh pressure line
- 135: circumferential groove
- 136: first axial face
- 137: first stepped surface
- 138: second axial face
- 139: second stepped surface
- 139a: radial inner portion
- 139b: radial outer portion
- 140: lid
- 142: screw
- 145: inwardly extending ring
- pB: braking pressure
- pR1: supply pressure (reservoir)
- pR2: reservoir pressure
- p1: truck supply pressure
- pC: control pressure
- EBM: emergency braking modulator
- V1: parking position
- V2: driving position
- V3: release position

## Claims

1. A park release valve (10) for a trailer vehicle (100) having a truck (102) and a trailer (104) and having a pneumatic brake system (106), and for controlling an emergency braking modulator (EBM) and/or spring-loaded brakes (SBA) (108a, 108b, 108c, 108d) of the trailer (104), comprising:
a valve housing (12), a moveable valve element (14), and a push-button (16) attached to the valve element (14) for moving the valve element (14) relative to the valve housing (12), the valve housing (12) comprising:
- a supply port (1-1) for receiving a supply pressure (p1) from the truck (102);
- a reservoir port (1-2) for connection with a trailer reservoir (4);
- a delivery port (2) for providing a brake pressure for at least an emergency braking modulator (EBM) and/or one spring-loaded brake (SBA) (108a, 108b, 108c, 108d) of the trailer (104); and
- an exhaust port (3) for releasing pressure to the atmosphere;
and the valve element (14) is moveable into at least three positions (V1, V2, V3), wherein
- in a parking position (V1) the delivery port (2) is in communication with the exhaust port (3);
- in a driving position (V2) the delivery port (2) is in communication with the supply port (1-1); and
- in a release position (V3) the delivery port (2) is in communication with the reservoir port (1-2); and
wherein when the supply pressure (p1) exceeds a predetermined threshold value, switching in the release position (V3) is prohibited,
**characterized in that** the valve element (14) is formed as a valve spool (15) having at least one land (20, 21, 22) and at least one valley (23, 24), wherein the valve housing (12) defines at least a first chamber (31), a second chamber (32), a third chamber (33), a fourth chamber (34) and a fifth chamber (35) between the valve spool (15) and the housing (12), which are selectively closable by moving the valve spool (15)

2. The park release valve (10) according to claim 1, further comprising a sixth chamber (36) in the valve housing (12), in which a piston (40) is movable and seated, the sixth chamber (36) is in communication with the supply port (1-1).

3. The park release valve (10) according to claim 2, wherein in valve spool (15) comprises a first end (42) and a second end (44), wherein the push-button (16) is attached to the first end (42) and the second end (44) is adapted to selectively engage the piston (40).

4. The park release valve (10) according to claim 3, wherein the piston (40) comprises an inner hollow portion (46) in which the second end (44) of the valve spool (15) is moveable and seated.

5. The park release valve (10) according to claim 3, wherein the piston (40) selectively contacts the second end (44) of the valve spool (15) for pushing the valve element (14) from the release position (V3) to the driving position (V2) or preventing the valve element (14) from being moved from one of the driving position (V2) and the parking position (V1) into the release position (V3)

6. The park release valve (10) according to any preceding claim, wherein the valve spool (15) comprises a first land (20), a second land (21), and a third land (22), wherein a first valley (23) separates the first and second lands (20, 21), and a second valley (24) separates the second and third lands (21, 22).

7. The park release valve (10) according to claim 6, wherein
- in the parking position (V1) the second valley (24) connects the fourth and fifth chambers (34, 35);
- in the driving position (V2) the first valley (23) connects the second and third chambers (32, 33) and the second valley (24) connects the third and fourth chambers (33, 34); and
- in the release position (V3) the first valley (23) connects the first and second chambers (31, 32).

8. The park release valve (10) according to claim 5 or 6, wherein at least in the driving position (V2) the supply port (1-1) is in communication with the reservoir port (1-2) for filling the trailer reservoir (4).

9. The park release valve (10) according to claim 8, wherein in every position (V1, V2, V3) the supply port (1-1) is in communication with the reservoir port (1-2) for filling the trailer reservoir (4).

10. The park release valve (10) according to claim 8 or 9, wherein a check valve (48) is provided between the supply port (1-1) and the reservoir port (1-2) for prohibiting flow from the reservoir port (1-2) to the supply port (1-1).

11. The park release valve (10) according to any preceding claim, wherein the valve housing (12) comprises a valve housing body (52) and at least one chamber insert (50) which is seated in a central recess (54) formed in the housing body (52), the chamber insert (50) comprising a central passage (56) for receiving the valve spool (15) therein and comprises at least a first through hole (61) for forming the first chamber (31).

12. The park release valve (10) according to claim 11, wherein the chamber insert (50) comprises further a second through hole (62) for forming the second chamber (32), a third through hole (63) for forming the third chamber (33), a fourth through hole (64) for forming the fourth chamber (34), and a fifth through hole (65) for forming the fifth chamber (35).

13. The park release valve (10) according to claim 11 or 12, wherein the chamber insert (50) comprises at least a first sealing ring (71), which seals radially outwardly against an inner surface (55) of the central recess (54) and radially inwardly against the valve spool (15).

14. The park release valve (10) according to claim 13, wherein the chamber insert (50) comprises a second sealing ring (72), a third sealing ring (73), and a fourth sealing ring (74), which each seal radially outwardly against the inner surface (55) of the central recess (54) and radially inwardly against the valve spool (15).

15. The park release valve (10) according to claim 3 and 13 or 14, further comprising a first lip seal (76) for sealing the first end (42) of the valve spool (15) and second lip seal (78) for sealing the second end (44) of the valve spool (15).

16. The park release valve (10) according to any of claims 11 to 15, wherein the chamber insert (50) is formed from a plastic material and releasably seated within the valve housing body (52).

17. The park release valve (10) according to any preceding claim, a position indicator (80) at the push button (16), which
- in the parking position (V1) is retracted into the push button (16);
- in the driving position (V2) is substantially flush with the push button (16); and
- in the release position (V3) protrudes from the push button (16).

18. A pneumatic brake system (106) for a trailer (104) of a trailer vehicle (100) having a truck (102) and the trailer (104), the pneumatic brake system (106) comprising:
- a trailer reservoir (4);
- a truck supply coupling (5) for receiving a supply pressure (p1) from the truck (2);
- at least one spring-loaded brake (SBA) (108a, 108b, 108c, 108d); and
- a park release valve (10) according to any of the claims 1 to 17.

## Patentansprüche

1. Parklöseventil (10) für ein Anhängerfahrzeug (100) mit einem Lkw (102) und einem Anhänger (104) sowie mit einem pneumatischen Bremssystem (106) und zum Steuern eines Notbremsmodulators (EBM) und/oder federbelasteten Bremsen (SBA) (108a, 108b, 108c, 108d) des Anhängers (104), das Folgendes umfasst:
ein Ventilgehäuse (12), ein bewegbares Ventilelement (14) und einen Druckknopf (16), der am Ventilelement (14) befestigt ist, zum Bewegen des Ventilelements (14) relativ zum Ventilgehäuse (12), wobei das Ventilgehäuse (12) Folgendes umfasst:
- eine Zulauföffnung (1-1) zum Empfangen eines Zulaufdrucks (p1) vom Lkw (102);
- eine Behälteröffnung (1-2) zur Verbindung mit einem Anhängerbehälter (4);
- eine Förderöffnung (2) zum Bereitstellen eines Bremsdrucks für mindestens einen Notbremsmodulator (EBM) und/oder eine federbelastete Bremse (SBA) (108a, 108b, 108c, 108d) des Anhängers (104) und
- eine Auslassöffnung (3) zum Abführen eines Drucks zur Atmosphäre;
und das Ventilelement (14) ist in mindestens drei Positionen (V1, V2, V3) bewegbar, wobei
- in einer Parkposition (V1) die Förderöffnung (2) mit der Auslassöffnung (3) in Kommunikation steht;
- in einer Antriebsposition (V2) die Förderöffnung (2) mit der Zulauföffnung (1-1) in Kommunikation steht und
- in einer Löseposition (V3) die Förderöffnung (2) mit der Behälteröffnung (1-2) in Kommunikation steht und wobei, wenn der Zulaufdruck (p1) einen vorbestimmten Schwellwert überschreitet, das Schalten in die Löseposition (V3) verboten ist,
**dadurch gekennzeichnet, dass** das Ventilelement (14) als ein Ventilschieber (15) gebildet ist, der mindestens ein Land (20, 21, 22) und mindestens ein Tal (23, 24) aufweist,
wobei das Ventilgehäuse (12) zwischen dem Ventilschieber (15) und dem Gehäuse (12) mindestens eine erste Kammer (31), eine zweite Kammer (32), eine dritte Kammer (33), eine vierte Kammer (34) und eine fünfte Kammer (35) definiert, die durch Bewegen des Ventilschiebers (15) selektiv schließbar sind.

2. Parklöseventil (10) nach Anspruch 1, das ferner eine sechste Kammer (36) im Ventilgehäuse (12) umfasst, in der ein Kolben (40) bewegbar ist und sitzt, wobei die sechste Kammer (36) mit der Zulauföffnung (1-1) in Kommunikation steht.

3. Parklöseventil (10) nach Anspruch 2, wobei der Ventilschieber (15) ein erstes Ende (42) und ein zweites Ende (44) umfasst, wobei der Druckknopf (16) am ersten Ende (42) befestigt ist und das zweite Ende (44) angepasst ist, selektiv in den Kolben (40) einzugreifen.

4. Parklöseventil (10) nach Anspruch 3, wobei der Kolben (40) einen inneren hohlen Abschnitt (46) umfasst, in dem das zweite Ende (44) des Ventilschiebers (15) bewegbar ist und sitzt.

5. Parklöseventil (10) nach Anspruch 3, wobei der Kolben (40) das zweite Ende (44) des Ventilschiebers (15) selektiv berührt, um das Ventilelement (14) aus der Löseposition (V3) in die Antriebsposition (V2) zu drücken oder um zu verhindern, dass das Ventilelement (14) aus einer der Antriebsposition (V2) und der Parkposition (V1) in die Löseposition (V3) bewegt wird.

6. Parklöseventil (10) nach einem der vorhergehenden Ansprüche, wobei der Ventilschieber (15) ein erstes Land (20), ein zweites Land (21) und ein drittes Land (22) umfasst, wobei ein erstes Tal (23) das erste und das zweite Land (20, 21) trennt und ein zweites Tal (24) das zweite und das dritte Land (21, 22) trennt.

7. Parklöseventil (10) nach Anspruch 6, wobei
- in der Parkposition (V1) das zweite Tal (24) die vierte und die fünfte Kammer (34, 35) verbindet;
- in der Antriebsposition (V2) das erste Tal (23) die zweite und die dritte Kammer (32, 33) verbindet und das zweite Tal (24) die dritte und die vierte Kammer (33, 34) verbindet und
- in der Löseposition (V3) das erste Tal (23) die erste und die zweite Kammer (31, 32) verbindet.

8. Parklöseventil (10) nach Anspruch 5 oder 6, wobei mindestens in der Antriebsposition (V2) die Zulauföffnung (1-1) zum Füllen des Anhängerbehälters (4) mit der Behälteröffnung (1-2) in Kommunikation steht.

9. Parklöseventil (10) nach Anspruch 8, wobei in jeder Position (V1, V2, V3) die Zulauföffnung (1-1) zum Füllen des Anhängerbehälters (4) mit der Behälteröffnung (1-2) in Kommunikation steht.

10. Parklöseventil (10) nach Anspruch 8 oder 9, wobei zum Verbieten eines Flusses von der Behälteröffnung (1-2) zur Zulauföffnung (1-1) zwischen der Zulauföffnung (1-1) und der Behälteröffnung (1-2) ein Sperrventil (48) vorgesehen ist.

11. Parklöseventil (10) nach einem der vorhergehenden Ansprüche, wobei das Ventilgehäuse (12) einen Ventilgehäusekörper (52) und mindestens einen Kammereinsatz (50), der in einer zentralen Ausnehmung (54), die im Gehäusekörper (52) gebildet ist, sitzt, wobei der Kammereinsatz (50) einen zentralen Durchlass (56) zum Empfangen des Ventilschiebers (15) darin umfasst, und mindestens ein Durchgangsloch (61) zum Bilden der ersten Kammer (31) umfasst.

12. Parklöseventil (10) nach Anspruch 11, wobei der Kammereinsatz (50) ferner ein zweites Durchgangsloch (62) zum Bilden der zweiten Kammer (32), ein drittes Durchgangsloch (63) zum Bilden der dritten Kammer (33), ein viertes Durchgangsloch (64) zum Bilden der vierten Kammer (34) und ein fünftes Durchgangsloch (65) zum Bilden der fünften Kammer (35) umfasst.

13. Parklöseventil (10) nach Anspruch 11 oder 12, wobei der Kammereinsatz (50) mindestens einen ersten Dichtring (71) umfasst, der radial nach außen gegen eine Innenfläche (55) der zentralen Ausnehmung (54) und radial nach innen gegen den Ventilschieber (15) abdichtet.

14. Parklöseventil (10) nach Anspruch 13, wobei der Kammereinsatz (50) einen zweiten Dichtring (72), einen dritten Dichtring (73) und einen vierten Dichtring (74) umfasst, die jeweils radial nach außen gegen die Innenfläche (55) der zentralen Ausnehmung (54) und radial nach innen gegen den Ventilschieber (15) abdichten.

15. Parklöseventil (10) nach Anspruch 3 und 13 oder 14, das ferner eine erste Lippendichtung (76) zum Abdichten des ersten Endes (42) des Ventilschiebers (15) und eine zweite Lippendichtung (78) zum Abdichten des zweiten Endes (44) des Ventilschiebers (15) umfasst.

16. Parklöseventil (10) nach einem der Ansprüche 11 bis 15, wobei der Kammereinsatz (50) aus einem Kunststoffmaterial gebildet ist und lösbar im Ventilgehäusekörper (52) sitzt.

17. Parklöseventil (10) nach einem der vorhergehenden Ansprüche, eine Positionsanzeige (80) am Druckknopf (16), die
- in der Parkposition (V1) in den Druckknopf (16) eingezogen ist;
- in der Antriebsposition (V2) im Wesentlichen mit dem Druckknopf (16) bündig ist und
- in der Löseposition (V3) vom Druckknopf (16) vorsteht.

18. Pneumatisches Bremssystem (106) für einen Anhänger (104) eines Anhängerfahrzeugs (100) mit einem Lkw (102) und dem Anhänger (104), wobei das pneumatische Bremssystem (106) Folgendes umfasst:
- einen Anhängerbehälter (4);
- eine Lkw-Zulaufkopplung (5) zum Empfangen eines Zulaufdrucks (p1) vom Lkw (2);
- mindestens eine federbelastete Bremse (SBA) (108a, 108b, 108c, 108d) und
- ein Parklöseventil (10) nach einem der Ansprüche 1 bis 17.

## Revendications

1. Soupape (10) de desserrage de frein de stationnement destinée à un véhicule (100) à remorque comprenant un camion (102) et une remorque (104) et doté d'un système (106) de freinage pneumatique, et servant à commander un modulateur de freinage d'urgence (EBM) et/ou des freins à ressort (SBA) (108a, 108b, 108c, 108d) de la remorque (104), comportant :
un carter (12) de soupape, un élément mobile (14) de soupape, et un bouton-poussoir (16) lié à l'élément (14) de soupape pour déplacer l'élément (14) de soupape par rapport au carter (12) de soupape, le carter (12) de soupape comportant :
- un orifice (1-1) d'alimentation servant à recevoir une pression d'alimentation (p1) en provenance du camion (102) ;
- un orifice (1-2) de réservoir servant au raccordement avec un réservoir (4) de remorque ;
- un orifice (2) de distribution servant à fournir une pression de freinage à au moins un modulateur de freinage d'urgence (EBM) et/ou à un frein à ressort (SBA) (108a, 108b, 108c, 108d) de la remorque (104) ;
et
- un orifice (3) d'échappement servant à relâcher la pression dans l'atmosphère ;
et l'élément (14) de soupape pouvant être amené dans au moins trois positions (V1, V2, V3),
- l'orifice (2) de distribution étant, dans une position (V1) de stationnement, en communication avec l'orifice (3) d'échappement ;
- l'orifice (2) de distribution étant, dans une position (V2) de conduite, en communication avec l'orifice (1-1) d'alimentation ; et
- l'orifice (2) de distribution étant, dans une position (V3) de desserrage, en communication avec l'orifice (1-2) de réservoir ; et
le passage à la position (V3) de desserrage étant interdit lorsque la pression d'alimentation (p1) dépasse une valeur seuil prédéterminée,
**caractérisé en ce que** l'élément (14) de soupape est formé comme un tiroir (15) de soupape présentant au moins un plateau (20, 21, 22) et au moins une vallée (23, 24), le carter (12) de soupape définissant au moins une première chambre (31), une deuxième chambre (32), une troisième chambre (33), une quatrième chambre (34) et une cinquième chambre (35) entre le tiroir (15) de soupape et le carter (12), qui peuvent être fermées sélectivement en déplaçant le tiroir (15) de soupape.

2. Soupape (10) de desserrage de frein de stationnement selon la revendication 1, comportant en outre une sixième chambre (36) dans le carter (12) de soupape, dans laquelle un piston (40) est mobile et prend appui, la sixième chambre (36) étant en communication avec l'orifice (1-1) d'alimentation.

3. Soupape (10) de desserrage de frein de stationnement selon la revendication 2, le tiroir (15) de soupape comportant une première extrémité (42) et une deuxième extrémité (44), le bouton-poussoir (16) étant lié à la première extrémité (42) et la deuxième extrémité (44) étant prévue pour interagir sélectivement avec le piston (40).

4. Soupape (10) de desserrage de frein de stationnement selon la revendication 3, le piston (40) comportant une partie intérieure creuse (46) dans laquelle la deuxième extrémité (44) du tiroir (15) de soupape est mobile et prend appui.

5. Soupape (10) de desserrage de frein de stationnement selon la revendication 3, le piston (40) entrant sélectivement en contact avec la deuxième extrémité (44) du tiroir (15) de soupape pour pousser l'élément (14) de soupape de la position (V3) de desserrage à la position (V2) de conduite ou empêcher que l'élément (14) de soupape soit déplacé d'une position parmi la position (V2) de conduite et la position (V1) de stationnement jusque dans la position (V3) de desserrage.

6. Soupape (10) de desserrage de frein de stationnement selon l'une quelconque des revendications précédentes, le tiroir (15) de soupape comportant un premier plateau (20), un deuxième plateau (21), et un troisième plateau (22), une première vallée (23) séparant les premier et deuxième plateaux (20, 21), et une deuxième vallée (24) séparant les deuxième et troisième plateaux (21, 22).

7. Soupape (10) de desserrage de frein de stationnement selon la revendication 6,
- la deuxième vallée (24) reliant, dans la position (V1) de stationnement, les quatrième et cinquième chambres (34, 35) ;
- dans la position (V2) de conduite, la première vallée (23) reliant les deuxième et troisième chambres (32, 33) et la deuxième vallée (24) reliant les troisième et quatrième chambres (33, 34) ; et
- la première vallée (23) reliant, dans la position (V3) de desserrage, les première et deuxième chambres (31, 32) .

8. Soupape (10) de desserrage de frein de stationnement selon la revendication 5 ou 6, l'orifice (1-1) d'alimentation étant, au moins dans la position (V2) de conduite, en communication avec l'orifice (1-2) de réservoir pour remplir le réservoir (4) de remorque.

9. Soupape (10) de desserrage de frein de stationnement selon la revendication 8, l'orifice (1-1) d'alimentation étant, dans chaque position (V1, V2, V3), en communication avec l'orifice (1-2) de réservoir pour remplir le réservoir (4) de remorque.

10. Soupape (10) de desserrage de frein de stationnement selon la revendication 8 ou 9, un clapet anti-retour (48) étant placé entre l'orifice (1-1) d'alimentation et l'orifice (1-2) de réservoir pour interdire un écoulement de l'orifice (1-2) de réservoir à l'orifice (1-1) d'alimentation.

11. Soupape (10) de desserrage de frein de stationnement selon l'une quelconque des revendications précédentes, le carter (12) de soupape comportant un corps (52) de carter de soupape et au moins un insert (50) de chambre qui prend appui dans un évidement central (54) formé dans le corps (52) de carter, l'insert (50) de chambre comportant un passage central (56) servant à recevoir le tiroir (15) de soupape dans celui-ci et comportant au moins un premier trou débouchant (61) servant à former la première chambre (31) .

12. Soupape (10) de desserrage de frein de stationnement selon la revendication 11, l'insert (50) de chambre comportant en outre un deuxième trou débouchant (62) servant à former la deuxième chambre (32), un troisième trou débouchant (63) servant à former la troisième chambre (33), un quatrième trou débouchant (64) servant à former la quatrième chambre (34), et un cinquième trou débouchant (65) servant à former la cinquième chambre (35).

13. Soupape (10) de desserrage de frein de stationnement selon la revendication 11 ou 12, l'insert (50) de chambre comportant au moins un premier anneau (71) d'étanchéité, qui assure une étanchéité radialement vers l'extérieur contre une surface intérieure (55) de l'évidement central (54) et radialement vers l'intérieur contre le tiroir (15) de soupape.

14. Soupape (10) de desserrage de frein de stationnement selon la revendication 13, l'insert (50) de chambre comportant un deuxième anneau (72) d'étanchéité, un troisième anneau (73) d'étanchéité, et un quatrième anneau (74) d'étanchéité, dont chacun assure une étanchéité radialement vers l'extérieur contre la surface intérieure (55) de l'évidement central (54) et radialement vers l'intérieur contre le tiroir (15) de soupape.

15. Soupape (10) de desserrage de frein de stationnement selon la revendication 3 et 13 ou 14, comportant en outre un premier joint (76) à lèvre servant à étanchéifier la première extrémité (42) du tiroir (15) de soupape et un deuxième joint (78) à lèvre servant à étanchéifier la deuxième extrémité (44) du tiroir (15) de soupape.

16. Soupape (10) de desserrage de frein de stationnement selon l'une quelconque des revendications 11 à 15, l'insert (50) de chambre étant formé d'une matière plastique et prenant appui de façon détachable à l'intérieur du corps (52) de carter de soupape.

17. Soupape (10) de desserrage de frein de stationnement selon l'une quelconque des revendications précédentes, un indicateur (80) de position au niveau du bouton-poussoir (16), qui
- dans la position (V1) de stationnement, est rétracté dans le bouton-poussoir (16) ;
- dans la position (V2) de conduite, affleure sensiblement le bouton-poussoir (16) ; et
- dans la position (V3) de desserrage, dépasse du bouton-poussoir (16).

18. Système (106) de freinage pneumatique destiné à une remorque (104) d'un véhicule (100) à remorque comprenant un camion (102) et la remorque (104), le système (106) de freinage pneumatique comportant :
- un réservoir (4) de remorque ;
- un accouplement (5) d'alimentation de camion servant à recevoir une pression d'alimentation (p1) en provenance du camion (2) ;
- au moins un frein à ressort (SBA) (108a, 108b, 108c, 108d) ; et
- une soupape (10) de desserrage de frein de stationnement selon l'une quelconque des revendications 1 à 17.
